# EUROPEAN PATENT SPECIFICATION

(11) **EP 2 574 717 B1**
(45) Date of publication and mention of the grant of the patent: **06.08.2014**
(21) Application number: 12186360.9
(22) Date of filing: 27.09.2012
(51) Int. Cl.: E06B 9/326, F16H 35/00, E06B 9/322

(54) **Breaking device for a chain of a screen, such as a window covering**
Sicherungseinrichtung für die Kette einer Jalousie
Dispositif de rupture pour une chaîne d'un écran, tel qu'un couvre-fenêtre

(30) Priority: 30.09.2011 NL 2007518
(43) Date of publication of application: 03.04.2013
(73) Proprietor: Coulisse B.V., 7468 ZG Enter (NL)
(72) Inventor: Klein Tuente, Bastiaan Franciscus, 7141 LB Groenlo (NL); De Vries, Ruben Hubert Jan, 6905 AK Zevenaar (NL); Hendriks, Wouter, 7543 TD Enschede (NL); Davids, Harry, 8103 BN Raalte (NL)
(74) Representative: Mink-Lindenburg, Charlotte Hildegard

(56) References cited:
- EP-A1- 0 869 254
- EP-A1- 1 319 793
- WO-A1-2011/078233

## Description

The present invention relates to a breaking device for a chain of a screen, such as a window covering, comprising:
- a housing formed by a first housing part and a second housing part, that are attachable to each other by a detachable coupling,
- a first sprocket and a first toothed wheel, that are connected to each other and are arranged on a joint shaft in the first housing part,
- a second toothed wheel, that is arranged in the second housing part, which is intended for attachment on a rotatable shaft on which the screen is attached, such that the second toothed wheel drives the rotatable shaft,
- wherein the first toothed wheel and the second toothed wheel are in engagement in operational position of the breaking device, wherein the chain is intended to engage the sprocket, and wherein the detachable coupling between the first housing part and the second housing part is arranged to release when a pulling force, that is exerted on both sides of the chain, reaches or exceeds a predetermined threshold value.

Such a breaking device is indispensable in chain operated screens to ensure the safety of particularly younger children. As soon as a child gets entangled in the chain, the breaking device will fall apart into the first and second housing part releasing the chain from the screen.

An example of such a breaking device is known from EP 1319793 A1 or from the not published Dutch patent application 2006404 of the same applicant. The known breaking device has a free hanging preferred embodiment suitable for attachment in the chain of the screen and a fixed embodiment suitable for attachment to an outer end of the rail of the screen. Both embodiments are provided with a third toothed wheel that brings the first toothed wheel into engagement with the second toothed wheel.

The present invention has for its object to provide an improvement to the fixed embodiment of the known breaking device.

The breaking device according to the invention thereto is characterized in that, in operational position, the first toothed wheel is arranged such in relation to the second toothed wheel, that the chain has an engagement side, extending in the proximity of both toothed wheels, and a non-engagement side, extending only in the proximity of the first toothed wheel, such that the pulling force to be exerted on the engagement side can be larger than the pulling force to be exerted on the non-engagement side.

Due to this mutual positioning of these toothed wheels with respect to each other a breaking device having few parts is provided that can withstand a larger pulling force on the engagement side than on the non-engagement side. The engagement side forms a preferred side for the operation of raising the screen, whereby larger pulling forces are possible on that preferred side without the housing breaking away.

In a first preferred embodiment, a centre line, that is drawn between the centre point of the first toothed wheel and the centre point of the second toothed wheel is at an angle to a force line, indicating a direction, wherein pulling forces are to be exerted on the chain during operation of the screen, which angle substantially lies between 20 and 160 degrees. In this range the maximum allowable pulling force on the engagement side, leaving the breaking device operational, is sufficiently larger than the maximum allowable pulling force on the non-engagement side leaving the breaking device operational to be able to define the engagement side as preferred side for operating raising of the screen.

More preferably the centre line is substantially perpendicular to the force line. In this preferred embodiment there is no question of a maximum allowable pulling force on the engagement side leaving the breaking device operational. The breaking device always remains operational independent of the amount of pulling force that is exerted on the engagement side.

In an extremely robust preferred embodiment the diameter of the sprocket is larger than the diameter of the first toothed wheel. On the engagement side consequently a larger pulling force can be exerted while the breaking device remains operational. This embodiment is thus suitable for heavy applications.

Preferably the first coupling is a click connection that is arranged subject to the threshold value.

According to an elegant preferred embodiment, the first and second housing part are attachable by means of a sliding connection wherein the sliding connection is arranged to release in a direction substantially perpendicular to a centre line, running between the centre point of the first toothed wheel and the centre point of the second toothed wheel.

In a further preferred embodiment of the breaking device according to the invention the first toothed wheel and the second toothed wheel substantially form a right-angled transmission. Consequently the breaking device is very compact.

The invention will now be further explained referring to the figures, wherein:
Figure 1A shows a schematic view of a screen provided with a first preferred embodiment of a breaking device according to the invention in operational position;
Figure 1B shows a schematic view of the screen of figure 1A with the breaking device in non-operational position;
Figure 2A shows a detailed view of the breaking device of figure 1A;
Figure 2B shows a detailed view of the breaking device of figure 1 B;
Figures 3A and 3B show the breaking device from a first viewpoint in assembled position respectively with disassembled parts of the first housing part;
Figures 3C and 3D show the breaking device from another viewpoint in assembled position respectively with disassembled parts of the first housing part;
Figure 4 shows a view with cut-away parts of the breaking device of figure 1A;
Figure 5 shows the view of figure 4 unfolded in the plane of the drawing; and
Figure 6 shows the view of figure 5 wherein the active forces are presented in more detail.

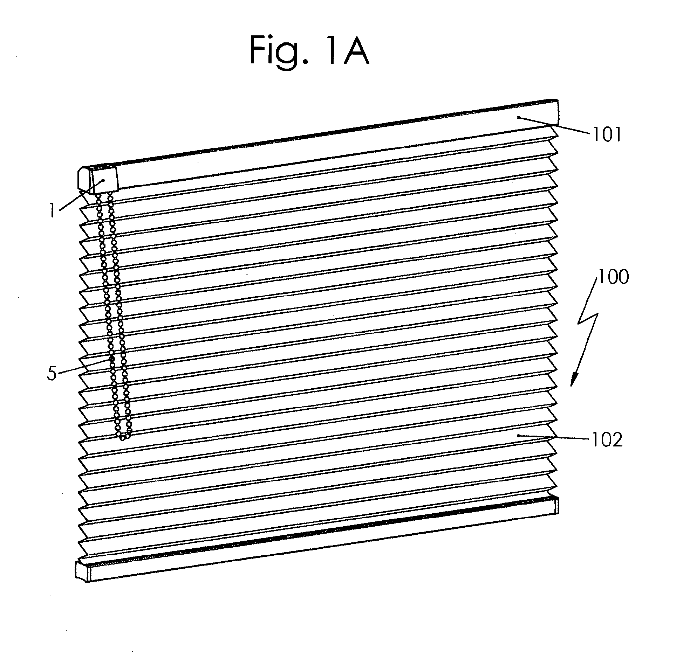

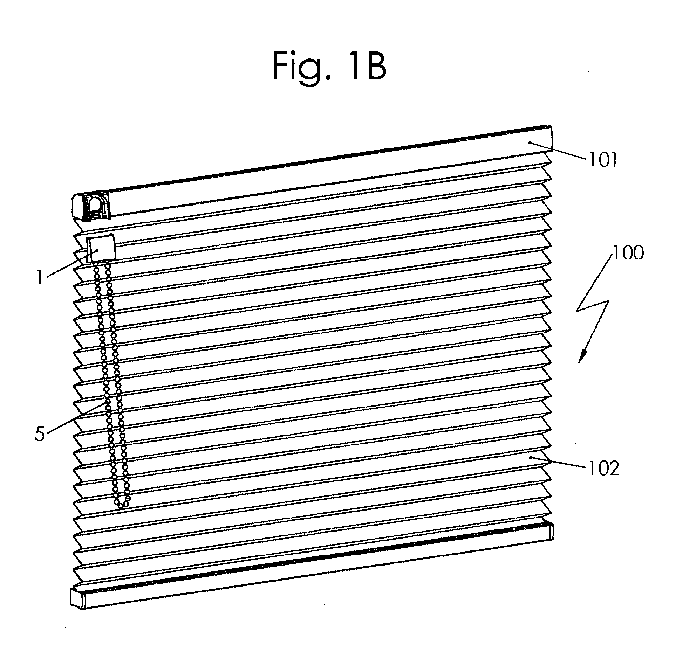

Figures 1A and 1B show a schematic view of a screen 100 for screening an architectural opening, such as a window covering, in a building. The screen 100 in this example is a pleated curtain 102 that is attached to a longitudinal housing or rail 101. In figure 1A the breaking device 1 according to the invention with chain 5 is shown in a first, operational position, wherein the screen 100 is operational. In figure 1B the breaking device 1 according to the invention is shown in a non-operational or detached position. This non-operational position is taken when the force exerted on both sides of chain 5 exceeds a predetermined threshold value, which is set from the viewpoint of safety, in particular for little children or pets.

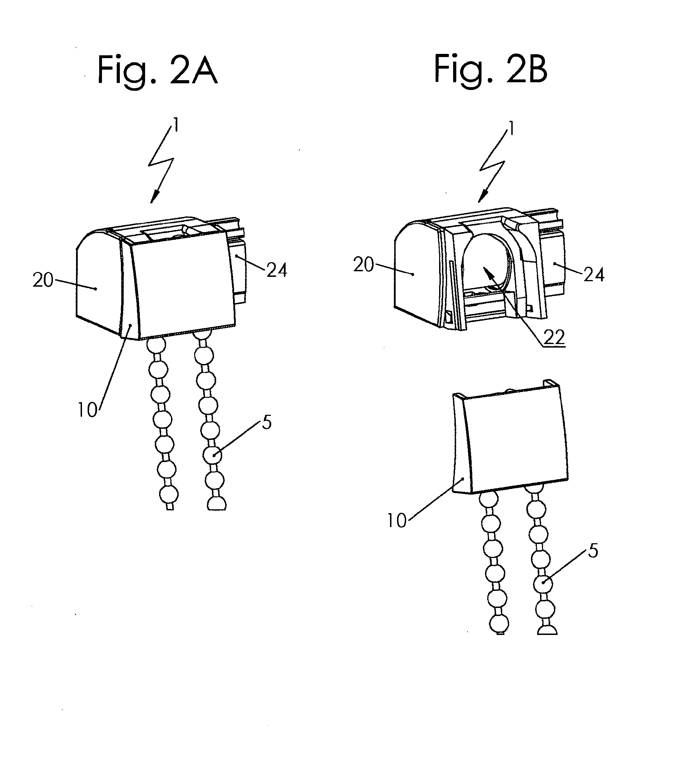

Figures 2A and 2B show the breaking device 1 of figures 1A respectively 1 B in more detail. Breaking device 1 comprises a housing that is composed of a first housing part 10 and a second housing part 20, that are attachable by means of a detachable coupling. The second housing part 20 is intended for attachment to a rail of a screen, in this example to rail 101 of screen 100 by means of attaching means 24. The second housing part 20 is attachable therewith to the "fixed world".

The first housing part 10 can take in two positions: a first position, shown in figure 2A, and a second position, shown in figure 2B. The operating chain 5 is incorporated in the first housing part 10.

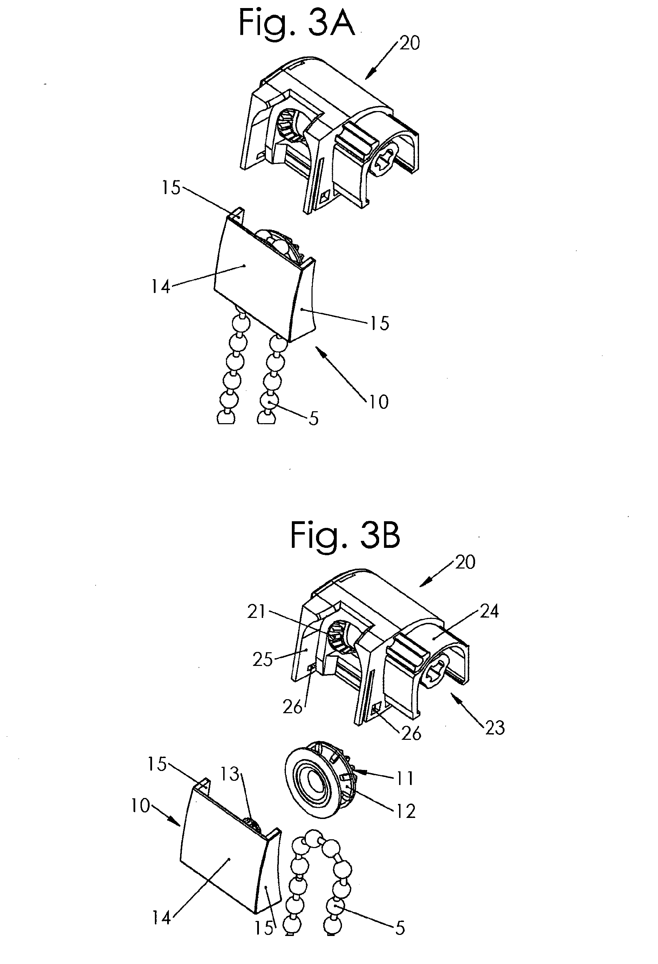

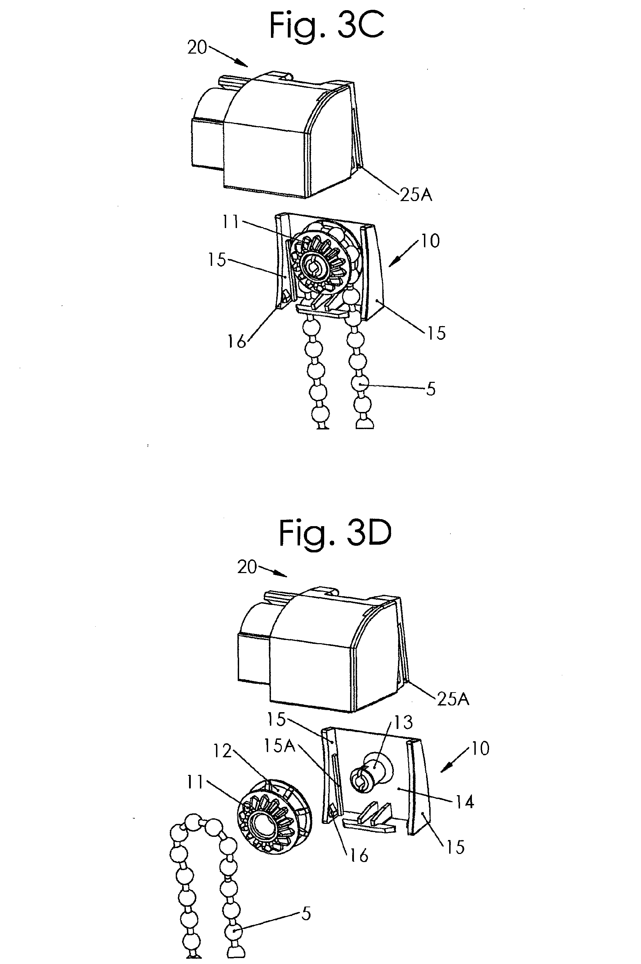

Figures 3A and 3B show the breaking device in a first view in assembled state respectively with disassembled parts of the first housing part 10. Figures 3C and 3D show the breaking device from another viewpoint in assembled state, respectively with disassembled parts of the first housing part 10.

The first housing part 10 comprises a plate 14 onto which a shaft 13 is arranged for attachment of both toothed wheel 11 and sprocket 12. Toothed wheel 11 and sprocket 12 run substantially parallel and the centre points thereof lie on the same axis 13. In the preferred embodiment shown the first toothed wheel 11 and the sprocket 12 form an integrated part that can be manufactured by means of injection moulding. Chain 5 engages on sprocket 12.

The diameter of sprocket 12 is at least equal to and preferably larger than the diameter of toothed wheel 11.

The second housing part 20 is provided with a second toothed wheel 21, which is intended for attachment to a rotatable shaft of the screen 100. In the fixing means 24 thereto a suitable shaft coupling is incorporated at the location of shaft passage 23. Toothed wheels 11 and 21 are intended for cooperation. The desired transmission can be chosen depending on the intended application. The second housing part 20 is provided with an opening 22 for toothed wheel 11.

In the preferred embodiment shown the first toothed wheel 11 and second toothed wheel 21 are substantially right-angled and thereby form a so-called right-angled transmission.

The first housing part 10 and the second housing part 20 are attachable to each other by means of a sliding connection. This sliding connection releases in the direction of the pulling force exerted on the chain 5. In the preferred embodiment shown the sliding connection is realized by cooperating peripheral edges 15, 25, that are arranged on the first housing part 10 respectively the second housing part 20. In the preferred embodiment shown edge 15 of plate 14 of the first housing part 10 are on the inner side provided with protrusions 15A. The second housing part 20 is at the outer side of edges 25 around opening 20 provided with recesses 25A. The protrusions 15A and the recesses 25A are arranged for cooperation and are complementally shaped. In the preferred embodiment shown this complementary shape is generally longitudinal respectively slit shaped.

The detachable coupling comprises a click connection that is arranged subject to the desired threshold value. The click connection secures housing part 10 and housing part 20 up to a predetermined value of a pulling force on the chain 5. The detachable coupling is arranged on or in the proximity of the facing peripheral edges of the breaking device. In the preferred embodiment shown housing part 10 comprises in the proximity of the bottom side and on the inner side of the peripheral edges 15 a pair of clickers 16, which are intended for cooperation with two recesses 26 that are arranged on the bottom side and on the outer side of the peripheral edges 25 on the second housing part. Clickers 16 are preferably manufactured of a somewhat flexible material, such that clickers 16 can be put into opening 26 by exerting some pressure on both sides. The amount of flexibility of clickers 16 co-determines the threshold value.

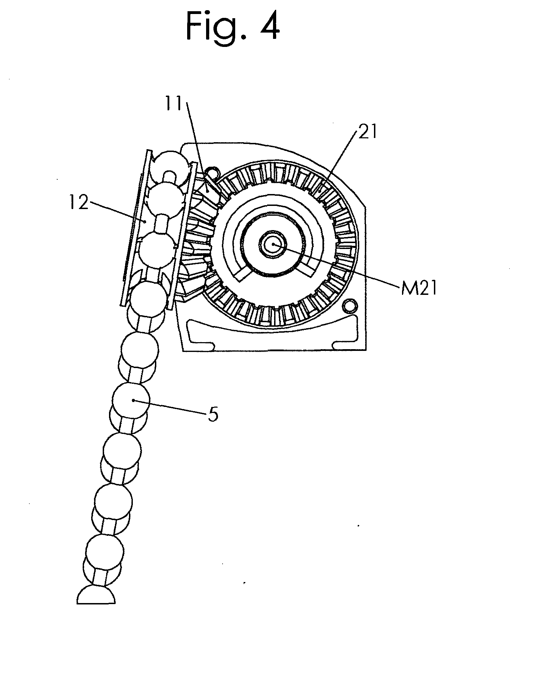

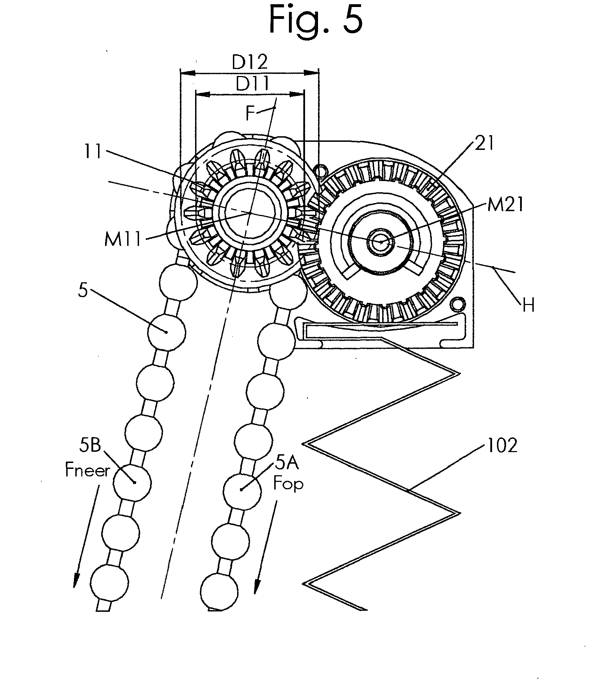

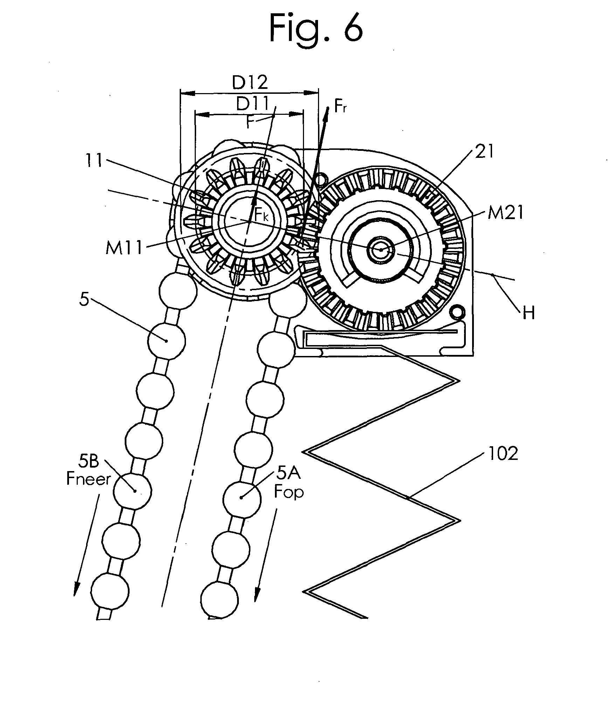

Figure 4 shows breaking device 1 with cut away parts, such that toothed wheels 11 and 21 are shown in engagement. Figure 5 shows the toothed wheels of figure 4 "folded open". The toothed wheels now are not at right angles, but lie in the same plane. Figure 6 shows the configuration of figure 5, wherein for purposes of illustration two further active forces are depicted.

The centre point of toothed wheel 11 is denoted with M11. The centre point of toothed wheel 21 is denoted with M21. Through the centre point M11 and M21 a line is drawn, which is denoted as the centre line H. In figure 5 and 6 also a line F is drawn. This line indicates a direction, wherein forces on chain 5 should be exerted in use of breaking device 1. Preferably the direction in which the breaking device releases or breaks away and particularly the direction in which the click connection works, lies substantially parallel to the force line F11. The force that the click connection exerts on toothed wheel 11 is denoted with F_{K}. The reaction force that the toothed wheels 11 and 21 exert on each other is denoted with F_{R}.

For a proper functioning of the breaking device 1 according to the invention it is of importance that the centre line H does not run parallel to the force line F. Preferably the angle between centre line H and the force line F lies between 20 and 160 degrees. In the preferred embodiment shown the centre line H substantially lies perpendicular to the force line F.

The reaction force F_{R} always lies perpendicular to the centre line H. The magnitude of F_{R} depends on the mutual position of the toothed wheels 11 and 21.

Preferably the click connection is designed such that F_{K} also lies perpendicular to the centre line H.

It is also of importance that the force Fᵤₚ that is exerted to raise the covering 101 of the screen 100 is exerted on the engagement side 5A of the chain, i.e. the side adjacent to the engagement side of both toothed wheels 11, 21. The other side of the chain 5 is intended to lower the screen 102. This side is denoted as the non-engagement side 5B. Here on the force F_{down} is exerted.

The resulting force on toothed wheel 11 is determined by Fᵤₚ, F_{down}, F_{R}, F_{K}, and runs in the direction of the force line F.

The inventive thought is based on the recognition that the maximum allowable pulling force Fᵤₚ that can be exerted on the engagement side 5A can be larger than the maximum allowable pulling force F_{down} that can be exerted on the non-engagement side 5B in the operational position of the breaking device.

Computations show that when the angle between the centre line H and the resulting force along the force line F is in the range between 20 and 160 degrees, this difference in maximum allowable pulling force between Fᵤₚ and F_{down} is sufficiently large to be able to define a preferred side for raising the screen. When the centre line H and the force line F are mutually perpendicular, the maximum allowable pulling force Fᵤₚ that can be exerted on the engagement side 5A is not limited by the breaking device. The breaking device will then always remain operational during the raising of the screen on the engagement side 5A of the chain 5 despite the magnitude of Fᵤₚ.

The threshold value limits the maximum force that can be exerted on both sides of the chain 5. This threshold value needs to be chosen such that (future) safety provisions can be met. At this time a realistic value for the threshold value is 40 Newton. When lowering the screen 102 of the preferred embodiment shown the force F_{down} to be exerted may not exceed half of this predetermined threshold value.

It is noted that the difference between the maximum allowable pulling force Fᵤₚ that can be exerted on the engagement side 5A and the maximum allowable pulling force F_{down} that can be exerted on the non-engagement side 5B in the operational position of the breaking device can be made smaller by changing the angle between H and F, such that H and F are no longer mutually perpendicular. Generally the following is valid: the larger the deviation of the perpendicular position is, the smaller the difference is between Fᵤₚ and F_{down}.

From the above description referring to figures 4, 5 and 6 it will be clear for a person skilled in the art that the right angled transmission of the toothed wheels in the preferred embodiment shown is not strictly necessary. The toothed wheels 11 and 21 can also cooperate with each other under different angles and can even lie in a flat plane. Nor is it of importance whether or not the centre points M11 and M21 lie on a horizontal centre line H. In the preferred embodiment shown a non-horizontal centre line H is chosen, such that the operational chain 5 during operation does not come into contact with screen 102. In the preferred embodiment shown the toothed wheels 11 and 21 are conical toothed wheels. A person skilled in the art will nevertheless immediately understand that the invention is not limited to the application of toothed wheels, but that the invention can also be realized by means of all other wheels that can be brought into engagement with each other.

## Claims

1. Breaking device for a chain of a screen, such as a window covering, comprising:
- a housing formed by a first housing part (10) and a second housing part (20), that are attachable to each other by a detachable coupling,
- a first sprocket (12) and a first toothed wheel (11), that are connected to each other and are arranged on a joint shaft in the first housing part (10),
- a second toothed wheel (21), that is arranged in the second housing part (20), which is intended for attachment on a rotatable shaft on which the screen is attached, such that the second toothed wheel drives the rotatable shaft,
- wherein the first toothed wheel (11) and the second toothed wheel (21) are in engagement in operational position of the breaking device, wherein a chain (5) is intended to engage the sprocket, and wherein the detachable coupling between the first housing part and the second housing part is arranged to release when a pulling force, that is exerted on both sides of the chain, reaches or exceeds a predetermined threshold value,
**characterized in that**, in operational position, the first toothed wheel (11) is arranged such in relation to the second toothed wheel (21), that the chain (5) has an engagement side (5A), extending in the proximity of both toothed wheels, and a non-engagement side (5B), extending only in the proximity of the first toothed wheel, such that the pulling force (Fᵤₚ) to be exerted on the engagement side (5A) can be larger than the pulling force (F_{down}) to be exerted on the non-engagement side (5B).

2. Breaking device according to claim 1, wherein a centre line (H), that is drawn between the centre point (M11) of the first toothed wheel (11) and the centre point (M21) of the second toothed wheel (21) is at an angle to a force line (F), indicating a direction, wherein pulling forces are to be exerted on the chain (5) during operation of the screen, which angle substantially lies between 20 and 160 degrees.

3. Breaking device according to claim 2, wherein the centre line (H) substantially is perpendicular to the force line (F).

4. Breaking device according to one of the preceding claims, wherein the diameter of the sprocket (12) is larger than the diameter of the first toothed wheel (11).

5. Breaking device according to one of the preceding claims, wherein the detachable coupling comprises a click connection (16, 26), that is arranged subject to the threshold value.

6. Breaking device according to one of the preceding claims, wherein the first and second housing part (10, 20) are attachable by means of a sliding connection (15, 25) wherein the sliding connection is arranged to release in a direction substantially perpendicular to a centre line (H), running between the centre point (M11) of the first toothed wheel (11) and the centre point (M21) of the second toothed wheel (21).

7. Breaking device according to one of the preceding claims, wherein the first and the second housing part (10, 20) are provided with the detachable coupling on facing circumferential edges.

8. Breaking device according to one of the preceding claims, wherein the first toothed wheel (11) and the second toothed wheel (21) form a substantially right-angled transmission.

9. Breaking device according to one of the preceding claims, wherein the first toothed wheel (11) and the second toothed wheel (21) are conical toothed wheels.

## Patentansprüche

1. Sollbruchvorrichtung für eine Kette einer Abschirmung, wie einer Fensterabdeckung, umfassend:
• ein Gehäuse, das aus einem ersten Gehäuseteil (10) und einem zweiten Gehäuseteil (20) gebildet wird, die miteinander über eine lösbare Verbindung verbindbar sind,
• ein erstes Kettenrad (12) und ein erstes Zahnrad (11), die miteinander verbunden sind und die auf einer gemeinsamen Achse in dem ersten Gehäuseteil (10) angeordnet sind,
• ein zweites Zahnrad (21), das in dem zweiten Gehäuseteil (20) angeordnet ist, welches dazu bestimmt ist, an einem drehbaren Schaft befestigt zu werden, an dem die Abschirmung befestigt ist, so dass das zweite Zahnrad den drehbaren Schaft dreht,
• wobei das erste Zahnrad (11) und das zweite Zahnrad (21) in Eingriff sind, wenn die Sollbruchvorrichtung sich in der Betriebsstellung befindet, wobei eine Kette (5) dazu bestimmt ist, in das Kettenrad einzugreifen und wobei die lösbare Verbindung zwischen dem ersten Gehäuseteil und dem zweiten Gehäuseteil so ausgelegt ist, dass sie sich löst, wenn eine Zugkraft, die auf beide Seiten der Kette wirkt, einen vorbestimmten Schwellenwert erreicht oder überschreitet,
**dadurch gekennzeichnet, dass** in Betriebsstellung das erste Zahnrad (11) so zu dem zweiten Zahnrad (21) angeordnet ist, dass die Kette (5) eine Eingriffsseite (5A) aufweist, die sich in Nähe der beiden Zahnräder erstreckt und eine Nichteingriffsseite (5B) aufweist, die sich nur in der Nähe des ersten Zahnrades erstreckt, so dass die Zugkraft (Fᵤₚ) die auf der Eingriffsseite (5A) wirkt, größer sein kann als die Zugkraft (F_{down}), die auf der Nichteingriffsseite (5B) wirkt.

2. Sollbruchvorrichtung gemäß Anspruch 1, wobei eine Mittellinie (H), die zwischen dem Mittelpunkt (M11) des ersten Zahnrades (11) und dem Mittelpunkt (M21) des zweiten Zahnrades (21) verläuft, in einem Winkel zu der Kraftlinie (F) verläuft, die eine Richtung angibt, in der während der Betätigung der Abschirmung Zugkräfte auf die Kette (5) ausgeübt werden, wobei der Winkel im Wesentlichen zwischen 20 und 160 Grad beträgt.

3. Sollbruchvorrichtung gemäß Anspruch 2, wobei die Mittellinie (H) im Wesentlichen senkrecht zu der Kraftlinie (F) verläuft.

4. Sollbruchvorrichtung gemäß einem der vorhergehenden Ansprüche, wobei der Durchmesser des Kettenrades (12) größer als der Durchmesser des ersten Zahnrades (11) ist.

5. Sollbruchvorrichtung gemäß einem der vorhergehenden Ansprüche, wobei die lösbare Verbindung eine Rastverbindung (16, 26) umfasst, die in Abhängigkeit von dem Schwellenwert ausgebildet ist.

6. Sollbruchvorrichtung gemäß einem der vorhergehenden Ansprüche, wobei das erste und das zweite Gehäuseteil (10, 20) über eine Gleitverbindung (15, 25) miteinander verbindbar sind, wobei die Gleitverbindung so ausgebildet ist, dass sie sich in einer Richtung löst, die im Wesentlichen senkrecht zu der Mittelinie (H), durch den Mittelpunkt (M11) des ersten Zahnrades (11) und den Mittelpunkt (M21) des zweiten Zahnrades (21) verläuft.

7. Sollbruchvorrichtung gemäß einem der vorhergehenden Ansprüche, wobei das erste und das zweite Gehäuseteil (10, 20) an gegenüberliegenden Umfangskanten mit der lösbaren Verbindung versehen sind.

8. Sollbruchvorrichtung gemäß einem der vorhergehenden Ansprüche, wobei das erste Zahnrad (11) und das zweite Zahnrad (21) ein im Wesentlichen rechtwinkliges Getriebe ausbilden.

9. Sollbruchvorrichtung gemäß einem der vorhergehenden Ansprüche, wobei das erste Zahnrad (11) und das zweite Zahnrad (21) konische Zahnräder sind.

## Revendications

1. Dispositif de rupture pour une chaîne d'un écran, tel qu'un couvre-fenêtre, comprenant :
- un boîtier formé par une première partie de boîtier (10) et une seconde partie de boîtier (20) qui peuvent être attachées l'une à l'autre par un couplage réversible,
- une première roue de chaîne (12) et une première roue dentée (11) qui sont connectées ensemble et sont disposées sur un axe commun dans la première partie de boîtier (10),
- une seconde roue dentée (21) disposée dans la seconde partie de boîtier (20), laquelle seconde roue dentée est destinée à être attachée sur un arbre pivotant sur lequel est attaché l'écran de telle sorte que la seconde roue dentée entraîne l'arbre pivotant,
- la première roue dentée (11) et la seconde roue dentée (21) étant en prise lorsque le dispositif de rupture est en position opérationnelle, une chaîne (5) étant destinée à s'engager dans la roue de chaîne, et le couplage réversible entre la première partie de boîtier et la seconde partie de boîtier étant conçu pour céder lorsque la force de traction exercée sur les deux côtés de la chaîne atteint ou dépasse une valeur seuil prédéterminée,
**caractérisé en ce que** dans la position opérationnelle, la première roue dentée (11) est agencée par rapport à la seconde roue dentée (21) de telle sorte que la chaîne (5) a un côté d'engagement (5A) qui s'étend à proximité des deux roues dentées et un côté de non-engagement (5B) qui s'étend uniquement à proximité de la première roue dentée, de telle sorte que la force de traction (Fᵤₚ) à exercer sur le côté d'engagement (5A) peut être plus importante que la force de traction (F_{down}) à exercer sur le côté de non-engagement (5B).

2. Dispositif de rupture selon la revendication 1, dans lequel une ligne centrale (H) qui est tracée entre le point central (M11) de la première roue dentée (11) et le point central (M21) de la seconde roue dentée (21) forme un angle par rapport à une ligne de force (F) indiquant une direction selon laquelle des forces de traction doivent être exercées sur la chaîne (5) durant le fonctionnement de l'écran, lequel angle se situe sensiblement entre 20 et 160 degrés.

3. Dispositif de rupture selon la revendication 2, dans lequel la ligne centrale (H) est sensiblement perpendiculaire à la ligne de force (F).

4. Dispositif de rupture selon l'une des revendications précédentes, dans lequel le diamètre de la roue de chaîne (12) est supérieur au diamètre de la première roue dentée (11).

5. Dispositif de rupture selon l'une des revendications précédentes, dans lequel le couplage réversible comprend une connexion par encliquetage (16, 26) qui est conçue en fonction de la valeur de seuil.

6. Dispositif de rupture selon l'une des revendications précédentes, dans lequel la première et la seconde parties de boîtier (10, 20) peuvent être fixées au moyen d'une connexion coulissante (15, 25), ladite connexion coulissante étant conçue pour céder dans une direction sensiblement perpendiculaire à une ligne centrale (H) s'étendant entre le point central (M11) de la première roue dentée (11) et le point central (M21) de la seconde roue dentée (21).

7. Dispositif de rupture selon l'une des revendications précédentes, dans lequel la première et la seconde parties de boîtier (10, 20) sont munies du couplage réversible sur des bords périphériques se faisant face.

8. Dispositif de rupture selon l'une des revendications précédentes, dans lequel la première roue dentée (11) et la seconde roue dentée (21) forment une transmission sensiblement à angle droit.

9. Dispositif de rupture selon l'une des revendications précédentes, dans lequel la première roue dentée (11) et la seconde roue dentée (21) sont des roues dentées coniques.
